# EUROPÄISCHE PATENTSCHRIFT

(11) **EP 1 646 518 B1**
(45) Veröffentlichungstag und Bekanntmachung des Hinweises auf die Patenterteilung: **29.09.2010**
(21) Anmeldenummer: 04738765.9
(22) Anmeldetag: 23.06.2004
(51) Int. Cl.: B60G 17/015, B60R 16/02, B60T 8/00

(54) **AN DAS WANKVERHALTEN EINES FAHRZEUGS ANGEPASSTES FAHRDYNAMIKREGELUNGSSYSTEM**
DRIVING DYNAMICS REGULATION SYSTEM ADAPTED TO THE ROLLING BEHAVIOUR OF A VEHICLE
SYSTEME DE REGULATION DU COMPORTEMENT DYNAMIQUE D'UN VEHICULE EN FONCTION DE LA TENDANCE AU ROULIS

(30) Priorität: 11.07.2003 DE 10331579; 17.12.2003 DE 10359216
(43) Veröffentlichungstag der Anmeldung: 19.04.2006
(73) Patentinhaber: ROBERT BOSCH GMBH, 70442 Stuttgart (DE)
(72) Erfinder: KIEREN, Martin, 71701 Schwieberdingen (DE); NENNINGER, Gero, 71706 Markgroeningen (DE); NIMMO, Matthew, 71368 Ludwigsburg (DE)
(86) Internationale Anmeldenummer: PCT/DE2004/001316
(87) Internationale Veröffentlichungsnummer: WO 2005/007426

(56) Entgegenhaltungen:
- DE-A- 19 632 943
- US-A- 5 825 284
- US-A- 6 038 495
- US-A1- 2002 173 882
- US-A1- 2003 093 201
- US-B1- 6 170 594
- US-B1- 6 185 489
- US-B1- 6 321 141
- US-B1- 6 424 907
- PATENT ABSTRACTS OF JAPAN Bd. 0165, Nr. 19 (M-1330), 26. Oktober 1992 (1992-10-26) & JP 4 191179 A (HINO MOTORS LTD), 9. Juli 1992 (1992-07-09)
- PATENT ABSTRACTS OF JAPAN Bd. 0165, Nr. 19 (M-1330), 26. Oktober 1992 (1992-10-26) & JP 4 191181 A (HINO MOTORS LTD), 9. Juli 1992 (1992-07-09)

## Beschreibung

Die Erfindung betrifft ein Verfahren zum Stabilisieren eines Fahrzeugs in einer kippkritischen Situation gemäss dem Oberbegriff des Patentanspruchs 1, sowie ein Fahrdynamikregelungssystem zur Kippstabilisierung eines Fahrzeugs gemäß dem Oberbegriff des Patentanspruchs 7.

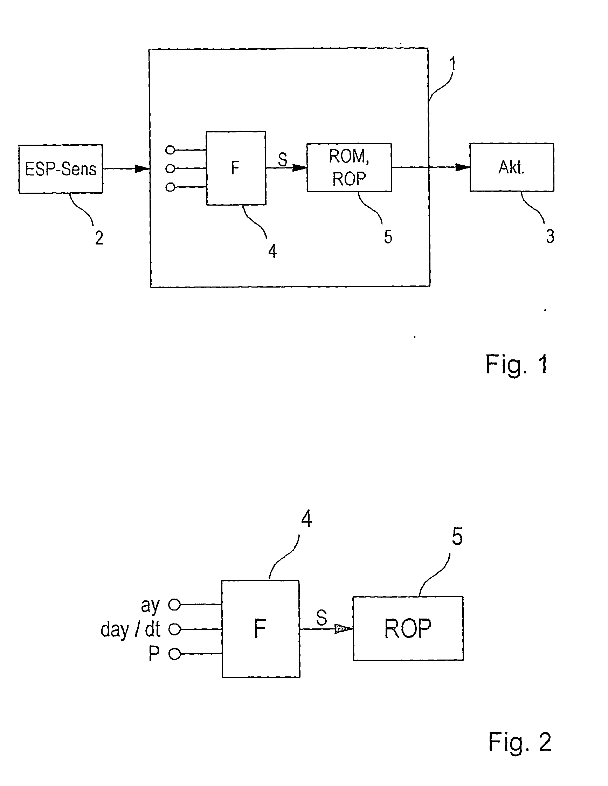

Fahrzeuge mit hohem Schwerpunkt, wie z.B. Minivans, SUVs (Sport Utility Vehicles) oder Transporter, neigen insbesondere bei Kurvenfahrten mit zu hoher Querbeschleunigung zum Kippen um die Längsachse. Bei solchen Fahrzeugen werden daher häufig Kippstabilisierungssysteme, wie z.B. ROP (Roll-Over-Prevention) oder ROM (Roll-Over-Mitigation) eingesetzt, die das Fahrzeug in fahrdynamisch kritischen Situationen stabilisieren und die Kippbewegung des Fahrzeugs um die Längsachse verringern. Ein aus dem Stand der Technik bekanntes Fahrdynamikregelungssystem mit ROP-Funktion ist beispielhaft in Fig. 1 dargestellt.

Fig. 1 zeigt eine stark vereinfachte schematische Blockdarstellung eines bekannten ROP-Systems, das im wesentlichen ein Steuergerät 1 mit einem ROP-Regelalgorithmus, eine Sensorik 2 zum Erkennen eines kippkritischen Fahrzustands und einen Aktuator 3 zum Durchführen eines Stabilisierungseingriffs umfasst. Erkennt das Steuergerät 1 aufgrund der Sensorsignale eine kippkritische Situation, wird z.B. mittels einer Bremsbetätigung am kurvenäußeren Vorderrad in den Fahrbetrieb eingegriffen.-Ein solches System ist z.B. aus der EP 1 030 798 B1 bekannt. Andere Systeme greifen auch mittels eines anderen Aktuators, wie z.B. eines aktiven Feder/Dämpfer-Systems (Normalkraftverteilungssystem) oder eines aktiven Lenksystems in den Fahrbetrieb ein.

Bei bekannten Kippstabilisierungssystemen wird eine kippkritische Situation üblicherweise dadurch erkannt, dass eine die Querdynamik des Fahrzeugs beschreibende Größe (die im Folgenden als Indikatorgröße S bezeichnet wird) ermittelt und schwellenwertüberwacht wird. D.h. die Indikatorgröße wird mit einem charakteristischen Schwellenwert verglichen und bei Überschreiten der Schwelle ein Stabilisierungseingriff durchgeführt. Die Indikatorgröße bestimmt üblicherweise auch die Stärke des Stabilisierungseingriffs.

Die Indikatorgröße ist in der Regel eine Funktion der Querbeschleunigung ay, der zeitlichen Änderung der Querbeschleunigung day/dt des Fahrzeugs und gegebenenfalls weiterer Einflussgrößen P.

Aus der US 6,424,907 B1 sind ein Verfahren und eine Vorrichtung zum Bestimmen und Erkennen der Kippgefahr eines Fahrzeugs mittels dynamischer Erkennung von Änderungen des Fahrzeugschwerpunkts bekannt. Das Verfahren bzw. die Vorrichtung sind dadurch gekennzeichnet, dass das Fahrzeug in einer Kurvenfahrt betrieben wird, dass während der Kurvenfahrt an mindestens zwei Rädern mit der ersten Radlast korrespondierende erste Zustandsgrößen erfasst werden, dass die erfassten ersten Zustandsgrößen mit die jeweilige Kurvenfahrt repräsentierenden Referenzwerten verglichen werden und dass aus den Abweichungen zwischen den erfassten ersten Zustandsgrößen und den Referenzwerten eine entsprechende Schwerpunktveränderung berechnet wird.

Aus der US 2002/0173882 A1 ist ein Verfahren zur Ermittlung einer Fahrzeugumkippgefahr bekannt. Dazu wird auf einer zweidimensionalen Karte abhängig von einem Wankwinkel und einer Wankwinkelgeschwindigkeit ermittelt, ob eine Umkippgefahr besteht.

Aus der JP 04 191 179 A ist die Ermittlung einer Grenzgeschwindigkeit für ein Fahrzeug bekannt, wobei die Grenzgeschwindigkeit abhängig von einer Differenz zwischen den auf die Dämpfer der linken und rechten Fahrzeugseite einwirkenden Radlasten und dem Lenkradwinkel ermittelt wird. Bei Überschreitung der Grenzgeschwindigkeit wird eine Waminformation an den Fahrer gegeben.

der JP 04 191 181 A wird mit Hilfe einer Fuzzy-Logik eine drohende Umkippgefahr erkannt und abhängig davon eine Fahrerwarnung ausgegeben.

Fig. 2 zeigt die verschiedenen Eingangsgrößen, die in die Berechnung der Indikatorgröße S einfließen. Wie zu erkennen ist, werden die Eingangsgrößen ay, day/dt, P gemäß einer Funktion 4 verknüpft und daraus die Indikatorgröße S berechnet. Die so gewonnene Indikatorgröße S wird schließlich dem Regelalgorithmus 5 zugeführt. Die Freigabe bzw. das Deaktivieren des Kippstabilisierungsalgorithmus 5 ist somit an die Höhe der Querbeschleunigung bzw. deren Gradienten geknüpft.

Das Kippverhalten eines Fahrzeugs ist neben den konstruktiven Eigenschaften des Fahrzeugs im wesentlichen von der Beladung abhängig. Darüber hinaus können sich auch konstruktive Merkmale, wie z.B. die Federung, altersbedingt verändern und somit auf die Kippneigung des Fahrzeugs auswirken. Derartige Einflüsse werden bei der in Fig. 1 dargestellten Fahrdynamikregelung mit Kippstabilisierungsfunktion ROM bzw. ROP nicht berücksichtigt.

Bekannte Kippstabilisierungsfunktionen ROP bzw. ROM sind daher insbesondere für SUVs oder Kleintransporter häufig sehr empfindlich, d.h. auf hohe Beladungszustände und weiche Federung abgestimmt. Ein Stabilisierungseingriff wird daher schon bei sehr niedrigen Querbeschleunigungswerten ausgelöst. Dies hat den Nachteil, dass bei normaler oder geringer Beladung die Kippstabilisierungseingriffe zu früh und zu heftig stattfinden.

Es ist daher die Aufgabe der vorliegenden Erfindung, ein Kippstabilisierungsverfahren für Fahrzeuge, sowie ein entsprechendes Fahrdynamikregelungssystem zu schaffen, mit dem das Wankverhalten des Fahrzeugs einfach und zuverlässig gelernt und somit eine unterschiedliche Beladung oder ein unterschiedlicher technischer Zustand des Fahrzeugs im Rahmen einer Kippstabilisierung berücksichtigt werden kann.

Gelöst wird diese Aufgabe gemäß der Erfindung durch die im Patentanspruch 1 sowie im Patentanspruch 8 angegebenen Merkmale. Weitere Ausgestaltungen der Erfindung sind Gegenstand von Unteransprüchen.

Ein wesentlicher Aspekt der Erfindung besteht darin, aus einer das Lenkverhalten beschreibenden Größe (z.B. dem Lenkwinkel oder der Lenkgeschwindigkeit) und einer das Wankverhalten beschreibenden Größe (z.B. der Rollrate oder dem Einfederweg) eine Information über die Kippneigung (im folgenden nur "Kippneigung") eines Fahrzeugs abzuschätzen, und das Kippstabilisierungssystem an die so ermittelte Kippneigung anzupassen. Die Kippneigung des Fahrzeugs wird vorzugsweise nach jedem Start (Zündung ein) des Fahrzeugs im Laufe des Fahrbetriebs neu gelernt und bei der Kippstabilisierung berücksichtigt.

Die Auswertung des Zusammenhangs zwischen der das Lenkverhalten beschreibenden Größe (im Folgenden als Lenkgröße bezeichnet) und der das Wankverhalten beschreibenden Größe (im Folgenden als Wankgröße bezeichnet) hat den Vorteil, dass die Kippneigung (bzw. Wankstabilität) des Fahrzeugs besonders zuverlässig geschätzt werden kann und somit unterschiedliche Beladungszustände oder ein veränderter technischer Zustand bei der Fahrdynamikregelung berücksichtigt werden kann.

Die ermittelte Kippneigung kann z.B. unmittelbar in die Berechnung der Indikatorgröße S einfließen und somit den Auslösezeitpunkt bzw. Deaktivierungszeitpunkt des Stabilisierungseingriffs beeinflussen.

Wahlweise kann die Information über die Kippneigung auch in den Kippstabilisierungsalgorithmus einfließen und eine charakteristische Eigenschaft oder Größe des Algorithmus, wie z.B. eine Anregelschwelle, eine Regelabweichung, z.B. für einen Radschlupf, oder eine Stellgröße, wie z.B. das Bremsmoment oder das Motormoment, beeinflussen. Die genannten charakteristischen Eigenschaften bzw. Größen sind somit eine Funktion der Kippneigung. Bei hoher Kippneigung, d.h. hohem Schwerpunkt oder schlechter Federung, kann somit ein Stabilisierungseingriff früher eingeleitet oder mit stärkerem Ausmaß durchgeführt werden als bei geringer Kippneigung.

Zur Bestimmung der Kippneigung des Fahrzeugs kann sowohl der statische als auch der dynamische Zusammenhang zwischen einer Lenk- und einer Wankgröße ausgewertet werden. Vorzugsweise werden wenigstens dynamische Fahrsituationen, wie z.B. dynamische Kurvenfahrten, bzgl. der Kippneigung ausgewertet und somit im Laufe der Fahrt die tatsächliche Kippneigung des Fahrzeugs immer genauer bestimmt.

Bei der Lenkgröße handelt es sich insbesondere um den (gemessenen) Lenkwinkel oder eine daraus abgeleiteten Größe, wie z.B. der Lenkgeschwindigkeit. Die Wankgröße umfasst z.B. die Radaufstandskräfte, den Einfederweg für einzelne Räder, die Vertikalbeschleunigung oder den Wankwinkel, oder daraus abgeleitete Größen, wie z.B. die Änderung der Einfederwege oder die Rollrate (Änderung des Wankwinkels).

In einer stationären Fahrsituation wird vorzugsweise der Zusammenhang zwischen dem Lenkwinkel und einer statischen Wankgröße, wie z.B. dem Einfederweg einzelner Räder ausgewertet und daraus eine Kippneigung geschätzt.

In einer dynamischen Fahrsituation wird z.B. der Zusammenhang zwischen der Lenkgeschwindigkeit und einer dynamischen Wankgröße, wie z.B. der Rollrate, ausgewertet.

Neben der rein statischen oder dynamischen Betrachtung kann auch die dynamische Änderung einer Wankgröße in einer stationären Fahrsituation ausgewertet werden. In einer stationären Kurvenfahrt z.B. zeigt ein Fahrzeug je nach Beladungszustand bzw. Zustand der Federung ein unterschiedliches Schwingungsverhalten um die Längsachse. Die Kippneigung bzw. Wankstabilität des Fahrzeugs kann somit auch durch Auswertung der Amplitude und/oder Frequenz der Schwingung einer Wankgröße über die Zeit geschätzt werden.

Gemäss einer bevorzugten Ausführungsform der Erfindung wird aus der Lenk- und der Wankgröße mittels Fuzzy-Logik ein Kippindikator ermittelt, der die Kippneigung des Fahrzeugs anzeigt.

Der Kippindikator kann zusätzlich mit einer Bewertungsfunktion gewichtet werden, die die Qualität des Lernvorgangs berücksichtigt und somit ein Maß für die Zuverlässigkeit des berechneten Kippindikators ist. Die Bewertungsfunktion bewertet dabei vorzugsweise die Anzahl der Lernvorgänge und/oder deren Zeitdauer während einer Fahrt. Dadurch wird insbesondere sichergestellt, dass die Kippneigung unter schwierigen Schätzbedingungen nicht fälschlich zu gering geschätzt wird.

Die Schätzung der Kippneigung wird vorzugsweise nur in vorgegebenen Fahrsituationen durchgeführt, die z.B. bezüglich des Lenkwinkels, der Querbeschleunigung oder einer anderen die Querdynamik eines Fahrzeugs beschreibenden Größe bestimmte vorgegebene Bedingungen erfüllen. Damit wird sichergestellt, dass das Ergebnis der Schätzung möglichst zuverlässig ist.

Nach einem Neustart des Fahrzeugs ist die Kippneigung bzw. der Kippindikator vorzugsweise auf einen Wert initialisiert, der eine hohe Kippneigung des Fahrzeugs repräsentiert und somit ein frühes und eher starkes Eingreifen des Kippstabilisierungsalgorithmus bewirkt. Erst mit zunehmender Fahrdauer und somit nach einigen Lernphasen stellt sich ein Kippindikator ein, der den tatsächlichen Beladungszustand repräsentiert.

Werden innerhalb einer oder mehrerer Lernphasen (Fahrsituationen) stark unterschiedliche Kippindikatoren ermittelt, wird vorzugsweise derjenige ausgewählt und der Fahrzeugstabilisierung zugrunde gelegt, der die höchste Kippneigung repräsentiert.

Die Erfindung wird nachstehend anhand der beigefügten Zeichnungen beispielhaft näher erläutert. Es zeigen:
Fig. 1 eine schematische Blockdarstellung eines bekannten Kippstabilisierungssystems;
Fig. 2 eine schematische Darstellung der Bildung einer Indikatorgröße S eines Kippstabilisierungsalgorithmus;
Fig. 3 eine Blockdarstellung eines Kippstabilisierungssystems gemäss einer Ausführungsform der Erfindung; und
Fig. 4 eine Blockdarstellung zur Darstellung der Erzeugung eines Kippindikators K1.

Bezüglich der Erläuterung der Fig. 1 und 2 wird auf die Beschreibungseinleitung verwiesen.

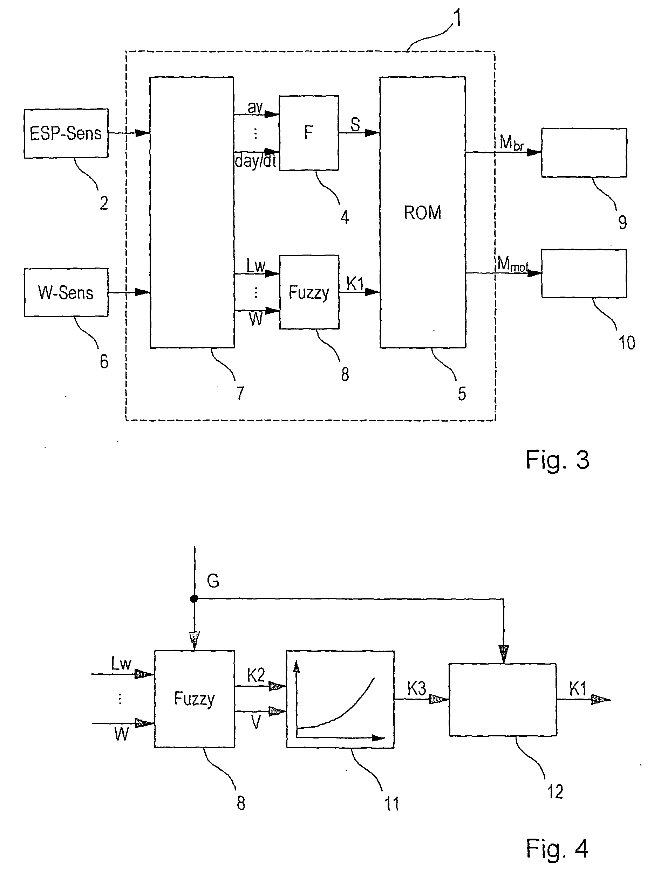

Fig. 3 zeigt eine schematische Blockdarstellung eines Kippstabilisierungssystems. Das System umfasst ein Steuergerät 1 mit einem Kippstabilisierungsalgorithmus ROM (Roll Over Mitigation), eine Sensorik 2,6 zum Erfassen von Fahrzustandsgrößen, und Aktuatoren 9,10, mit denen Stabilisierungseingriffe umgesetzt werden. Die Blocks 4,7,8 sind in Software realisiert und dienen der Verarbeitung der Sensorsignale (Block 7), der Schätzung der Kippneigung bzw. Wankstabilität des Fahrzeugs (Block 8) und der Erzeugung einer Indikatorgröße S (Block 4).

Zur Bestimmung einer kippkritischen Fahrsituation bedient sich das Kippstabilisierungssystem der bereits vorhandenen ESP-Sensorik 2. Diese umfasst insbesondere Raddrehzahlsensoren, einen Lenkwinkelsensor, einen Querbeschleunigungssensor, etc.. Die Sensorsignale werden in Block 7 weiter verarbeitet und dabei insbesondere entstört und gefiltert. Vorzugsweise wird auch eine Plausibilitätsüberwachung der Sensorsignale durchgeführt.

Ausgewählte Signale, nämlich die Querbeschleunigung ay, deren Gradient day/dt und gegebenenfalls weitere Einflussgrößen P fließen in den Block 4. Darin wird, wie vorstehend bzgl. Fig. 2 beschrieben wurde, eine Indikatorgröße S berechnet, mit der die Freigabe bzw. Deaktivierung von Stabilisierungsmaßnahmen gesteuert wird. Die Indikatorgröße bestimmt dabei auch die Stärke des Stabilisierungseingriffs.

Neben der ESP-Sensorik 2 kann das Kippstabilisierungssystem eine zusätzliche Sensorik 6 zur Messung einer Wankgröße umfassen. Die Sensorik 6 kann somit z.B. einen Sensor zur Messung der Radaufstandskräfte, der Einfederwege, der Vertikalbeschleunigung oder der Rollrate oder einer daraus abgeleiteten Größe, wie z.B. des jeweiligen Gradienten umfassen. Die Sensorsignale werden in Block 7 aufbereitet und dann der Fuzzy-Informationsverarbeitung 8 zugeführt. Der Block 8 erhält als Eingangsgrößen wenigstens eine Lenk- und eine Wankgröße.

Bei der Lenkgröße handelt es sich insbesondere um den (gemessenen) Lenkwinkel Lw oder eine daraus abgeleitete Größe, wie z.B. die Lenkgeschwindigkeit dLw/dt. Die Wankgröße W umfasst z.B. die Radaufstandskräfte, einen Einfederweg, die Vertikalbeschleunigung oder den Wankwinkel, oder daraus abgeleitete Größen, wie z.B. die Änderung des Einfederwegs oder die Rollrate (Änderung des Wankwinkels).

Die Fuzzy-Informationsverarbeitung 8 ist in der Lage, sowohl einen statischen als auch einen dynamischen Zusammenhang zwischen einer Lenk- und einer Wankgröße W auszuwerten und daraus einen Kippindikator K1 zu ermitteln, der die Kippneigung bzw. die Wankstabilität des Fahrzeugs anzeigt. Bei einer stationären Betrachtung einer Fahrsituation wird z.B. der Zusammenhang zwischen dem Lenkwinkel und einer statischen Wankgröße W, wie z.B. dem Einfederweg ausgewertet und daraus eine Kippneigung geschätzt. Bei einer dynamischen Betrachtung wird z.B. der Zusammenhang zwischen der Lenkgeschwindigkeit und einer dynamischen Wankgröße W, wie z.B. der Rollrate, ausgewertet.

Der Block 8 umfasst eine Fuzzy-Informationsverarbeitung, mit der der Zusammenhang zwischen Lenk- und Wankgröße abgebildet und aus der Verknüpfung der einzelnen Größen die Kippneigung bzw. Wankstabilität des Fahrzeugs geschätzt wird. Im Rahmen der Fuzzy-Schätzung innerhalb von Block 8 werden auf den Basismengen einer Lenkgröße Lw und einer Wankgröße W jeweils eine endliche Menge von linguistischen Werten definiert, denen Fuzzy-Mengen zugeordnet sind. Gemeinsam mit der Regelbasis, die den Zusammenhang zwischen einzelnen linguistischen Werten der Lenkgröße und der Wankgröße modelliert, repräsentieren sie das Expertenwissen über den Zusammenhang zwischen Fahrervorgabe und Wankdynamik abhängig von der Schwerpunkthöhe.

Mit Hilfe der aus der Fuzzy-Logik bekannten Verarbeitungsschritte "Fuzzyfizierung" und "Inferenz" werden die Lenk- und die Wankgröße auf die linguistische Variable "Veränderung der Schwerpunkthöhe" abgebildet. Die Basismenge dieser Variablen besteht z.B. aus den linguistischen Werten (gegenüber Normalbeladung) "unverändert", "leicht erhöht" und "stark erhöht". Durch Defuzzyfizierung erhält man schließlich den Kippindikator K1, z.B. im Intervall [0...1], der ein Maß für die aktuelle Kippneigung des Fahrzeugs ist. Der Kippindikator K1 kann z.B. Werte zwischen 0: Schwerpunkthöhe unverändert, d.h. normale Kippneigung, und 1: Schwerpunkthöhe stark erhöht, d.h. hohe Kippneigung, annehmen. Anstelle der Abbildung der Kippneigung auf eine kontinuierliche Grundmenge ist auch die Einordnung in mehrere diskrete Klassen denkbar ("Fuzzy-Klassifizierung").

Neben der rein statischen oder dynamischen Betrachtung kann zusätzlich z.B. die dynamische Änderung einer Wankgröße W in einer stationären Fahrsituation ausgewertet werden. In einer stationären Kurvenfahrt zeigt ein Fahrzeug je nach Beladungszustand bzw. Zustand der Federung ein unterschiedliches Schwingungsverhalten um die Längsachse. Die Kippneigung bzw. Wankstabilität des Fahrzeugs kann somit auch durch Auswertung der Amplitude und/oder Frequenz der Schwingung einer Wankgröße bei festem Lenkwinkel geschätzt werden.

Der resultierende Kippindikator K1 wird nun dazu genutzt, charakteristische Eigenschaften oder Größen des Kippstabilisierungsalgorithmus 5 zu verändern oder die Stärke eines Stabilisierungseingriffs entsprechend der Kippneigung zu modifizieren. Hierzu kann z.B. die Anregelschwelle des Algorithmus, die zulässige Regelabweichung einer Regelgröße, wie z.B. eines Radschlupfs, oder eine intern berechnete Stellgröße verändert werden.

Wahlweise kann auch die Indikatorgröße S in Abhängigkeit von der Kippneigung berechnet werden. Zusätzlich kann dem Fahrer eine erhöhte Kippneigung und damit eine erhöhte Kippgefahr auch angezeigt werden, wie z.B. mittels einer Signallampe im Kombiinstrument.

Fig. 4 zeigt eine Ausführungsform eines Algorithmus zur Schätzung des Kippindikators K1 mittels Fuzzy-Informationsverarbeitung 8. Das Schätzverfahren wird nur in vorgegebenen günstigen Fahrsituationen, d.h. solchen Situationen, die eine hohe Aussagekraft für die Schätzung haben, durchgeführt. Zu diesem Zweck werden dem Fuzzy-Algorithmus 8 vorgegebene Fahrdynamikgrößen G zugeführt anhand derer die Fahrsituation bewertet werden kann. Erfüllen die Fahrdynamikgrößen G, wie z.B. eine Querbeschleunigung oder eine Lenkgeschwindigkeit wenigstens eine vorgegebene Bedingung, wird der Fuzzy-Algorithmus 8 aktiviert bzw. deaktiviert.

Darüber hinaus wird eine Vertrauensvariable V erzeugt, die die Qualität der Schätzung und somit die Zuverlässigkeit des Kippindikators K2 bewertet. Die Vertrauensvariable V kann z.B. die Anzahl der Lernvorgänge und/oder der Zeitdauer während einer Fahrt berücksichtigen.

Der von der Fuzzy-Informationsverarbeitung 8 erzeugte Kippindikator K2 und die Vertrauensvariable V werden dann mittels eines Kennfelds 11 miteinander verknüpft. Durch die Verknüpfung werden qualitativ betrachtet bei kleinen Werten der Vertrauensvariablen V (z.B. V=0) hohe Werte für den resultierenden Kippindikator K3 (d.h. hohe Kippgefahr) und bei hohen Werten der Vertrauensvariable V (z.B. V=1) ein Kippindikator mit K3=K2 erzeugt. Je nach Qualität der Schätzung wird der von der Fuzzy-Informationsverarbeitung 8 ermittelte Kippindikator K2 also entweder beibehalten, d.h. K3=K2, oder in Richtung kritischerer Werte erhöht.

Der Kippindikator K3 wird schließlich einer Initialisierungs- und Filtereinheit 12 zugeführt. Die Einheit 12 ist derart eingerichtet, dass sie nach jedem Neustart des Fahrzeugs einen Startwert für den Kippindikator K1 ausgibt, der sicherheitshalber einen relativ hohen Wert, wie z.B. K1=1, hat. Dieser Wert bewirkt somit eine empfindliche Einstellung des Stabilisierungsalgorithmus 5. Während der Fahrt reduziert sich der Kippindikator K1 dann gegebenenfalls.

Die Einheit 12 dient ferner dazu, die während einer Fahrt bestimmten Schätzwerte K3 zu filtern und den resultierenden Wert K1 der Kippstabilisierung zugrunde zu legen. Die Filterung wird vorzugsweise als Maximumbildung aller Schätzwerte K3 über der Zeit oder als gleitender Mittelwert über eine bestimmte Anzahl von Schätzwerte ausgeführt.

Die Einheit 12 ist ferner derart eingerichtet, dass bei längeren Fahrten ohne ausreichende Lernphasen, wie z.B. Autobahnfahrten ohne Kurven, der Kippindikator K1 auf einen Wert erhöht wird, der eine höhere Kippneigung repräsentiert und somit zu einem empfindlicheren Anregeln des Stabilisierungsalgorithmus 5 führt. Die Einheit 12 wird ebenfalls in Abhängigkeit von vorgegebenen Fahrdynamikgrößen G aktiviert bzw. deaktiviert.

Die vorstehend beschriebene Anordnung ermöglicht eine besonders genaue und zuverlässige Schätzung der Kippneigung eines Fahrzeugs sowohl durch eine statische als auch eine dynamische Betrachtung des Zusammenhangs zwischen einer Lenk- und einer Wankgröße.

### Bezugszeichenliste

- 1: Steuergerät
- 2: ESP-Sensorik
- 3: Aktuatorik
- 4: Funktion zur Bildung einer Indikatorgröße
- 5: Kippstabilisierungsalgorithmus
- 6: Wankgrößen-Sensorik
- 7: Signalverarbeitung und -überwachung
- 8: Fuzzy-Informationsverarbeitung
- 9: Bremssystem
- 10: Motormanagement
- 11: Kennfeld
- 12: Initialisierungs- und Filtereinheit
- ay: Querbeschleunigung
- day/dt: Änderung der Querbeschleunigung
- P: Einflussgrößen
- Lw: Lenkgröße
- W: Wankgröße
- K1,K2,K3: Kippindikatoren
- S: Indikatorgröße

## Patentansprüche

1. Verfahren zur Kippstabilisierung eines Fahrzeugs in kritischen Fahrsituationen, bei dem verschiedene Fahrzustandsgrößen (ay,day/dt,P) mittels einer Sensorik (2,6) erfasst werden und ein Kippstabilisierungsalgorithmus (4,5) in einer kippkritischen Situation mittels eines Aktuators (3,9,10) in den Fahrbetrieb eingreift, um das Fahrzeug zu stabilisieren, **dadurch gekennzeichnet,**
**dass** aus der Lenkgröße (Lw) und der Wankgröße (W) ein Kippindikator (K2) ermittelt wird, und ein weiterer Kippindikator (K3) durch die Verknüpfung des Kippindikators (K2) mit einer Bewertungsfunktion (V) ermittelt wird, wobei die Bewertungsfunktion (V) die Qualität der Schätzung des weiteren Kippindikators (K3) angibt,
wobei aus dem weiteren Kippindikator (K3) ein Kippindikator (K1) ermittelt wird, der die Kippneigung des Fahrzeugs anzeigt und im Rahmen einer Kippstabilisierung berücksichtigt wird.

2. Verfahren nach Anspruch 1, **dadurch gekennzeichnet, dass** eine Indikatorgröße (S), mittels der ein Stabilisierungseingriff freigegeben oder deaktiviert wird, oder eine charakteristische Eigenschaft oder Größe des Kippstabilisierungsalgorithmus (4,5) in Abhängigkeit von der Kippneigung (K1) ermittelt wird.

3. Verfahren nach Anspruch 1, **dadurch gekennzeichnet, dass** die Lenkgröße einen Lenkwinkel (Lw) oder eine Lenkgeschwindigkeit (dLw/dt) umfasst.

4. Verfahren nach Anspruch 1, **dadurch gekennzeichnet, dass** die Wankgröße (W), die Radaufstandskräfte, den Einfederweg, die Vertikalbeschleunigung oder den Wankwinkel, oder daraus abgeleitete Größen, wie z.B. die Rollrate, umfasst.

5. Verfahren nach einem der vorhergehenden Ansprüche, **dadurch gekennzeichnet, dass** eine Anregelschwelle des Kippstabilisierungsalgorithmus (4,5), eine Regelabweichung oder eine Stellgröße des Algorithmus (5) in Abhängigkeit von der Kippneigung (K1) verändert wird.

6. Verfahren nach Anspruch 5, **dadurch gekennzeichnet, dass** der Kippindikator (K1) mittels Fuzzy-Informationsverarbeitung (8) ermittelt wird.

7. Fahrdynamikregelungssystem zur Kippstabilisierung eines Fahrzeugs in kritischen Fahrsituationen, umfassend ein Steuergerät (1) in dem ein Kippstabilisierungsalgorithmus (4,5) hinterlegt ist, eine Sensorik (2) zum Erfassen aktueller IstWerte (ay,day/dt,P) der Regelung und einen Aktuator (3) zum Durchführen eines Stabilisierungseingriffs, **dadurch gekennzeichnet, dass** eine Sensorik (6) zum Ermitteln einer Wankgröße (W) und eine Sensorik (2) zum Bestimmen einer Lenkgröße (Lw),
sowie eine Einrichtung (8) vorgesehen ist, die aus der Lenkgröße (Lw) und der Wankgröße (W) einen Kippindikator (K2) ermittelt, die einen weiterer Kippindikator (K3) durch die Verknüpfung des Kippindikators (K2) mit einer Bewertungsfunktion (V) ermittelt, wobei die Bewertungsfunktion (V) die Qualität der Schätzung weiteren des Kippindikators (K3) angibt,
wobei aus dem weiteren Kippindikator (K3) ein Kippindikator (K1) ermittelt wird, der die Kippneigung des Fahrzeugs anzeigt und im Rahmen einer Kippstabilisierung berücksichtigt wird.

8. Fahrdynamikregelungssystem nach Anspruch 7, **dadurch gekennzeichnet, dass** das Steuergerät (1) eine Indikatorgröße (S), mittels der ein Stabilisierungseingriff freigegeben oder deaktiviert wird, oder eine charakteristische Eigenschaft oder Größe des Kippstabilisierungsalgorithmus (4,5) in Abhängigkeit von der Kippneigung (K1) ermittelt.

9. Fahrdynamikregelungssystem nach Anspruch 7 oder 8, **dadurch gekennzeichnet, dass** die Sensorik (6) zum Ermitteln einer Wankgröße (W) eine Rollratensensor umfasst.

## Claims

1. Method for performing tilt stabilization of a vehicle in critical driving situations, in which various driving state variables (ay, day/dt, P) are detected by means of a sensor system (2, 6), and in a situation which is critical in terms of tilting a tilt stabilization algorithm (4, 5) intervenes in the driving operation by means of an actuator (3, 9, 10) in order to stabilize the vehicle, **characterized in that** a tilt indicator (K2) is determined from the steering variable (Lw) and the rolling variable (W), and a further tilt indicator (K3) is determined by the logic linking of the tilt indicator (K2) to an evaluation function (V), wherein the evaluation function (V) indicates the quality of the estimation of the further tilt indicator (K3),
wherein a tilt indicator (K1), which indicates the tilting inclination of the vehicle and is taken into account within the scope of a tilt stabilization process, is determined from the further tilt indicator (K3).

2. Method according to Claim 1, **characterized in that** an indicator variable (S), by means of which a stabilization intervention is enabled or deactivated, or a characteristic property or variable of the tilt stabilization algorithm (4, 5) is determined as a function of the tilting inclination (K1).

3. Method according to Claim 1, **characterized in that** the steering variable comprises a steering angle (Lw) or a steering speed (dLw/dt).

4. Method according to Claim 1, **characterized in that** the rolling variable (W) comprises the wheel contact forces, the spring compression travel, the vertical acceleration or the rolling angle, or variables derived therefrom such as, for example, the rolling rate.

5. Method according to one of the preceding claims, **characterized in that** a regulating threshold of the tilt stabilization algorithm (4, 5), a control error or a manipulated variable of the algorithm (5) is changed as a function of the tilting inclination (K1).

6. Method according to Claim 5, **characterized in that** the tilt indicator (K1) is determined by means of fuzzy information processing (8).

7. Driving dynamics control system for tilt stabilization of a vehicle in critical driving situations, comprising a control unit (1) in which a tilt stabilization algorithm (4, 5) is stored, a sensor system (2) for sensing current actual values (ay, day/dt, P) of the control process, and an actuator (3) for carrying out a stabilization intervention, **characterized in that** a sensor system (6) is provided for determining a rolling variable (W), and a sensor system (2) is provided for determining a steering variable (Lw), as well as a device (8) which determines a tilt indicator (K2) from the steering variable (Lw) and the rolling variable (W), and which determines a further tilt indicator (K3) by logically linking the tilt indicator (K2) to an evaluation function (V), wherein the evaluation function (V) specifies the quality of the estimation of the further tilt indicator (K3),
wherein a tilt indicator (K1) which indicates the tilting inclination of the vehicle and is taken into account within the scope of a tilt stabilization process is determined from the further tilt indicator (K3).

8. Driving dynamics control system according to Claim 7, **characterized in that** the control unit (1) determines an indicator variable (S) by means of which a stabilization intervention is enabled or deactivated, or determines a characteristic property or size of the tilt stabilization algorithm (4, 5) as a function of the tilting inclination (K1).

9. Driving dynamics control system according to Claim 7 or 8, **characterized in that** the sensor system (6) comprises a rolling rate sensor for determining a rolling variable (W).

## Revendications

1. Procédé de stabilisation de l'inclinaison d'un véhicule dans des situations de conduite critiques, selon lequel différentes grandeurs d'état du véhicule (ay, day/dt, P) sont acquises au moyen d'un dispositif de détection (2, 6) et un algorithme de stabilisation de l'inclinaison (4, 5) intervient dans le fonctionnement du véhicule dans une situation d'inclinaison critique au moyen d'un actionneur (3, 9, 10) afin de stabiliser le véhicule, **caractérisé en ce qu'**un indicateur d'inclinaison (K2) est déterminé à partir de la grandeur de direction (Lw) et de la grandeur de roulis (W) et un indicateur d'inclinaison supplémentaire (K3) est déterminé en combinant l'indicateur d'inclinaison (K2) avec une fonction d'évaluation (V), la fonction d'évaluation (V) indiquant la qualité de l'estimation de l'indicateur d'inclinaison supplémentaire (K3),
un indicateur d'inclinaison (K1) étant déterminé à partir de l'indicateur d'inclinaison supplémentaire (K3), lequel indicateur d'inclinaison (K1) indique la pente d'inclinaison du véhicule et est pris en considération dans le cadre d'une stabilisation de l'inclinaison.

2. Procédé selon la revendication 1, **caractérisé en ce qu'**une grandeur indicatrice (S) au moyen de laquelle une intervention de stabilisation est validée ou désactivée ou une propriété ou une grandeur caractéristique de l'algorithme de stabilisation de l'inclinaison (4, 5) est déterminée en fonction de la pente d'inclinaison (K1).

3. Procédé selon la revendication 1, **caractérisé en ce que** la grandeur de direction comprend un angle de direction (Lw) ou une vitesse de changement de direction (dLw/dt).

4. Procédé selon la revendication 1, **caractérisé en ce que** la grandeur de roulis (W) comprend les forces de contact des roues, le débattement des ressorts, l'accélération verticale ou l'angle de roulis ou encore des grandeurs qui en sont dérivées, comme par exemple le taux de roulis.

5. Procédé selon l'une des revendications précédentes, **caractérisé en ce qu'**un seuil d'amorce de la régulation de l'algorithme de stabilisation de l'inclinaison (4, 5), un écart de régulation ou une grandeur de commande de l'algorithme (5) est modifié(e) en fonction de la pente d'inclinaison (K1).

6. Procédé selon la revendication 5, **caractérisé en ce que** l'indicateur d'inclinaison (K1) est déterminé au moyen d'un traitement flou des informations (8).

7. Système de régulation de la dynamique de conduite pour stabiliser l'inclinaison d'un véhicule dans des situations de conduite critiques, comprenant un module de commande (1) dans lequel est stocké un algorithme de stabilisation de l'inclinaison (4, 5), un dispositif de détection (2) pour acquérir des valeurs réelles (ay, day/dt, P) courantes de la régulation et un actionneur (3) pour effectuer une intervention de stabilisation, **caractérisé en ce qu'**il est prévu un dispositif de détection (6) pour déterminer une grandeur de roulis (W) et un dispositif de détection (2) pour déterminer une grandeur de direction (Lw) ainsi qu'un dispositif (8) qui détermine un indicateur d'inclinaison (K2) à partir de la grandeur de direction (Lw) et de la grandeur de roulis (W), lequel détermine un indicateur d'inclinaison supplémentaire (K3) en combinant l'indicateur d'inclinaison (K2) avec une fonction d'évaluation (V), la fonction d'évaluation (V) indiquant la qualité de l'estimation de l'indicateur d'inclinaison supplémentaire (K3),
un indicateur d'inclinaison (K1) étant déterminé à partir de l'indicateur d'inclinaison supplémentaire (K3), lequel indicateur d'inclinaison (K1) indique la pente d'inclinaison du véhicule et est pris en considération dans le cadre d'une stabilisation de l'inclinaison.

8. Système de régulation de la dynamique de conduite selon la revendication 7, **caractérisé en ce que** le module de commande (1) détermine une grandeur indicatrice (S), au moyen de laquelle une intervention de stabilisation est validée ou désactivée, ou une propriété ou une grandeur caractéristique de l'algorithme de stabilisation de l'inclinaison (4, 5) en fonction de la pente d'inclinaison (K1).

9. Système de régulation de la dynamique de conduite selon la revendication 7 ou 8, **caractérisé en ce que** le dispositif de détection (6) pour déterminer une grandeur de roulis (W) comprend un détecteur de taux de roulis.
